# FASCICULE DE BREVET EUROPEEN

(11) **EP 0 593 353 B1**
(45) Date de publication et mention de la délivrance du brevet: **21.08.1996**
(21) Numéro de dépôt: 93402504.0
(22) Date de dépôt: 11.10.1993
(51) Int. Cl.: F16L 39/00, F16L 3/22

(54) **Bride de raccordement pour installation de climatisation de véhicule automobile**
Verbindungsflansch für die Klimaanlage eines Fahrzeuges
Coupling flange for airconditioning in a vehicle

(30) Priorité: 12.10.1992 FR 9212160
(43) Date de publication de la demande: 20.04.1994
(73) Titulaire: Valeo Climatisation, 78321 La Verrière (FR)
(72) Inventeur: Chevallier, Christophe, F-72000 Le Mans (FR)
(74) Mandataire: Gamonal, Didier

(56) Documents cités:
- DE-A- 3 011 226
- GB-A- 2 068 490
- US-A- 3 869 153
- US-A- 3 944 264
- US-A- 4 163 372

## Description

L'invention concerne une bride pour le raccordement simultané à un élément d'un circuit de fluide, notamment dans une installation de climatisation de véhicule automobile, des extrémités libres de deux tubulures qui s'étendent sensiblement parallèlement l'une à l'autre à partir de ces extrémités et sont reliées mutuellement à leurs extrémités opposées, la bride étant propre à s'appuyer sur des bourrelets annulaires présentés par lesdites extrémités libres pour comprimer des joints d'étanchéité entre ceux-ci et des surfaces de réception dudit élément, sous l'action de moyens de serrage sollicitant la bride vers ledit élément, la bride ayant la forme d'une plaque allongée traversée dans son épaisseur par deux ouvertures dont l'une a la forme d'une encoche débouchant dans l'une de ses extrémités, propres à recevoir respectivement les deux tubulures et comportant des régions sensiblement semi-circulaires adaptés à la circonférence des tubulures, ladite encoche formant, entre l'extrémité de la bride et la région semi-circulaire, une fente à bords parallèles sensiblement tangents à cette dernière.

Une telle bride est décrite dans FR-A-2 668 242. Cette bride connue est destinée à raccorder à un détendeur d'installation de climatisation les extrémités libres des tubulures d'entrée et de sortie d'un évaporateur, qui sont reliées mutuellement à leurs extrémités opposées par cet évaporateur et qui sont disposées l'une au-dessus de l'autre. Dans la bride décrite, les deux ouvertures sont des encoches débouchant respectivement dans ses extrémités opposées. Pour éviter que la bride se sépare des tubulures lorsqu'elle est désassemblée du condenseur et tombe, les bords des fentes formées par les encoches sont inclinés par rapport au plan contenant les axes des fonds semi-circulaires.

Le but de l'invention est d'obtenir le même résultat de façon encore plus sûre, et ceci quelle que soit la disposition relative des deux tubulures.

L'invention prévoit notamment que, dans une bride du genre défini en introduction, la seconde ouverture est entourée par la matière de la bride sur toute sa périphérie et comporte une région élargie propre à permettre le passage du bourrelet de la tubulure correspondante et se raccordant directement à la région sensiblement semi-circulaire.

D'autres caractéristiques, complémentaires ou alternatives, de l'invention sont énoncées ci-après :
- La convexité de la région semi-circulaire de la seconde ouverture est tournée vers l'encoche.
- Ladite région élargie a un profil en arc de cercle supérieur à un demi-cercle.
- L'une au moins des faces de la bride, destinée à venir en appui sur les bourrelets, présente, dans ses zones adjacentes aux régions semi-circulaires des deux ouvertures, une courbure convexe dans la direction longitudinale de la bride.
- L'une au moins des faces de la bride, destinée à venir en appui sur les bourrelets, présente, dans ses zones adjacentes aux régions semi-circulaires des deux ouvertures, une courbure convexe dans la direction transversale de la bride.
- Lesdites zones sont constituées par des portions de surfaces sphériques.
- Les centres des sphères auxquelles appartiennent lesdites portions de surfaces sont situées sensiblement sur les axes des régions semi-circulaires des deux ouvertures.

D'autres avantages de l'invention apparaîtront à l'examen de la description détaillée ci-après, et des dessins annexés, sur lesquels :
- les figures 1 et 2 sont des vues respectivement de face et de côté d'une bride selon l'invention ;
- la figure 3 est une vue de côté d'un assemblage utilisant cette bride, celle-ci étant représentée en coupe.

La bride illustrée a la forme d'une plaque 1 plus longue que large, traversée dans son épaisseur par deux ouvertures 2 et 3. L'ouverture 2 est une encoche présentant un fond semi-circulaire 4 se raccordant aux deux bords parallèles 5 d'une fente qui débouche dans l'une des extrémités de la plaque 1. L'ouverture 3 a un profil fermé composé de deux arcs de cercle, à savoir un arc 6 très légèrement supérieur à un demicercle et un arc 7 sensiblement supérieur à un demi-cercle, le rayon R3 de l'arc 7 étant supérieur au rayon R2 de l'arc 6. Les axes A1, A2 et A3 des arcs 4, 6 et 7 respectivement sont perpendiculaires au plan général de la plaque 1 et mutuellement alignés, dans cet ordre, dans un plan longitudinal de symétrie de celle-ci.

La bride 1 est destinée à coopérer avec deux tubulures 21 et 22 s'engageant respectivement dans les ouvertures 2 et 3 et s'étendant normalement selon les axes A1 et A2, les rayons de ces tubulures étant légèrement inférieurs au rayon R1 de l'arc 4 et au rayon R2 de l'arc 6 respectivement. Ces tubulures, dont l'entr'axe correspond donc à celui des arcs 4 et 6, sont munies à leurs extrémités libres de bourrelets 23 et 24 dont le premier a un rayon supérieur au rayon R1 et dont le second a un rayon supérieur au rayon R2 et inférieur au rayon R3. Des vis de serrage non représentées coopérant avec des trous filetés 8, d'axes également perpendiculaires au plan général de la plaque, permettent d'appliquer celle des faces de la bride tournée vers les bourrelets contre ceux-ci de façon à comprimer des joints d'étanchéité entre les bourrelets et une surface de réception de l'élément 25 à raccorder aux tubulures.

Lorsque la bride est désolidarisée de cet élément, le seul mouvement qu'elle peut exécuter par rapport aux tubulures est un pivotement autour d'un axe s'étendant dans la direction de la largeur de la bride. Ce mouvement est limité par la venue des deux extrémités longitudinales 9 et 10 du profil de l'ouverture 3 en butée respectivement sur deux génératrices opposées de la tubulure correspondante, et ne permet pas à la bride de se dégager des tubulures. Pour la dégager volontairement, ou pour l'engager sur les tubulures, il faut écarter élastiquement l'une de l'autre les extrémités libres des deux tubulures de façon que l'axe 29 de la tubulure 22 vienne se confondre sensiblement avec l'axe A3 et que, par un mouvement approprié de la bride, le bourrelet 24 puisse traverser la région de l'ouverture 3 définie par l'arc 7.

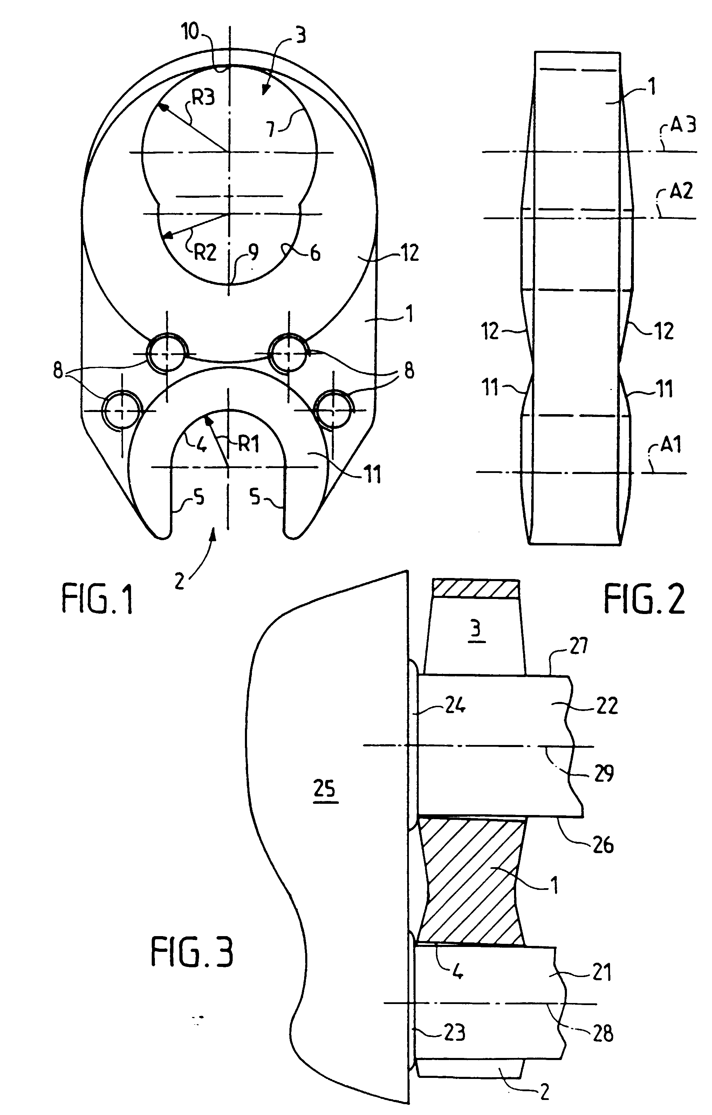

Les zones 11, adjacentes au fond semi-circulaire 4 de l'encoche 2 et les zones 12, adjacentes à la région semicirculaire 6 de l'ouverture 3, des deux faces de la bride sont des portions de surfaces sphériques, les centres des sphères auxquelles appartiennent les zones 11 étant situés sur l'axe A1 et les centres des sphères auxquelles appartiennent les zones 12 étant situés sur l'axe A2. Ces portions de surfaces sphériques se prolongent le long des bords 5 de l'encoche, jusqu'à l'extrémité de la bride dans laquelle débouche celle-ci, et autour de la région en arc de cercle 7 de l'ouverture 3. La bride est symétrique d'une part par rapport au plan contenant des axes A1, A2 et A3, d'autre part par rapport à un plan perpendiculaire à ces axes, et peut être montée indifféremment dans deux positions dans lesquelles ses deux faces respectivement viennent en contact avec les bourrelets des tubulures. La forme sphérique des zones 11 et 12 leur confère une double convexité dans la direction longitudinale et dans la direction latérale de la bride, qui ajuste la position de leurs points de contact avec les bourrelets de façon a exercer sur ceux-ci une poussée centrée sensiblement sur les axes 28 et 29 des tubulures lorsque ces derniers n'ont pas exactement la même orientation que les axes A1 et A2. La convexité dans la direction longitudinale intervient lorsque le mésalignement est dû au fait que les deux bourrelets ne sont pas exactement dans le même plan, situation illustrée par la figure 3. La convexité dans la direction latérale joue son rôle lorsque les axes des deux tubulures ne sont pas parfaitement coplanaires.

## Revendications

1. Bride pour le raccordement simultané à un élément (25) d'un circuit de fluide, notamment dans une installation de climatisation de véhicule automobile, des extrémités libres de deux tubulures (21,22) qui s'étendent sensiblement parallèlement l'une à l'autre à partir de ces extrémités et sont reliées mutuellement à leurs extrémités opposées, la bride étant propre à s'appuyer sur des bourrelets annulaires (23,24) présentés par lesdites extrémités libres pour comprimer des joints d'étanchéité entre ceux-ci et des surfaces de réception dudit élément, sous l'action de moyens de serrage sollicitant la bride vers ledit élément, la bride ayant la forme d'une plaque allongée (1) traversée dans son épaisseur par deux ouvertures (2, 3) dont l'une a la forme d'une encoche débouchant dans l'une de ses extrémités, propres à recevoir respectivement les deux tubulures et comportant des régions sensiblement semi-circulaires (4, 6) adaptés à la circonférence des tubulures, ladite encoche formant, entre l'extrémité de la bride et la région semi-circulaire, une fente à bords parallèles (5) sensiblement tangents à cette dernière, caractérisée en ce que la seconde ouverture est entourée par la matière de la bride sur toute sa périphérie et comporte une région élargie (7) propre à permettre le passage du bourrelet (24) de la tubulure correspondante (22) et se raccordant directement à la région sensiblement semi-circulaire.

2. Bride selon la revendication 1, caractérisée en ce que la convexité de la région semi-circulaire (6) de la seconde ouverture est tournée vers l'encoche.

3. Bride selon l'une des revendications 1 et 2, caractérisée en ce que ladite région élargie a un profil en arc de cercle (7) supérieur à un demi-cercle.

4. Bride selon l'une des revendications précédentes, caractérisée en ce que l'une au moins des faces de la bride, destinée à venir en appui sur les bourrelets, présente, dans ses zones (11, 12) adjacentes aux régions semi-circulaires des deux ouvertures, une courbure convexe dans la direction longitudinale de la bride.

5. Bride selon l'une des revendications précédentes, caractérisée en ce que l'une au moins des faces de la bride, destinée à venir en appui sur les bourrelets, présente, dans ses zones (11, 12) adjacentes aux régions semi-circulaires des deux ouvertures, une courbure convexe dans la direction transversale de la bride.

6. Bride selon la revendication 4 et la revendication 5, caractérisée en ce que lesdites zones sont constituées par des portions de surfaces sphériques.

7. Bride selon la revendication 6, caractérisée en ce que les centres des sphères auxquelles appartiennent lesdites portions de surfaces sont situées sensiblement sur les axes (A1, A2) des régions semi-circulaires des deux ouvertures.

## Patentansprüche

1. Verbindungsflansch für die gleichzeitige Verbindung der freien Enden von zwei Stutzen (21, 22), die von diesen Enden aus in etwa parallel zueinander verlaufen und an ihren entgegengesetzten Enden miteinander verbunden sind, mit einem Element (25) eines Kältemittelkreislaufs, insbesondere in der Klimaanlage eines Kraftfahrzeugs, wobei der Flansch an ringförmigen Wulsten (23, 24) zur Auflage kommen kann, die an den besagten freien Enden vorgesehen sind, um Dichtungen zwischen diesen Wulsten und Aufnahmeflächen des besagten Elements zusammenzudrücken, was unter der Einwirkung von Klemmitteln erfolgt, die den Flansch zu dem besagten Element hin beanspruchen, wobei der Flansch die Form einer länglichen Platte (1) aufweist, durch deren Dicke zwei Öffnungen (2, 3) hindurchgehen, von denen eine die Form einer Ausklinkung hat, die zu einem seiner Enden führt, welche jeweils einen der beiden Stutzen aufnehmen können und in etwa halbkreisförmige Bereiche (4, 6) umfassen, die an den Umfang der Stutzen angepaßt sind, wobei die besagte Ausklinkung zwischen dem Ende des Flansches und dem halbkreisförmigen Bereich einen Schlitz mit parallelen Kanten (5) bildet, die in etwa tangential zu diesem verlaufen, **dadurch gekennzeichnet**, daß die zweite Öffnung durch das Material des Flansches auf ihrem gesamten Umfang eingefaßt ist und einen verbreiterten Bereich (7) umfaßt, der den Durchgang des Wulstes (24) des entsprechenden Stutzens (22) ermöglicht und sich direkt an den in etwa halbkreisförmigen Bereich anschließt.

2. Flansch nach Anspruch 1 , **dadurch gekennzeichnet**, daß die Wölbung des halbkreisförmigen Bereichs (6) der zweiten Öffnung zur Ausklinkung hin gerichtet ist.

3. Flansch nach einem der Ansprüche 1 und 2 , d a**dadurch gekennzeichnet**, daß der besagte verbreiterte Bereich ein kreisbogenförmiges Profil (7) hat, das größer als ein Halbkreis ist.

4. Flansch nach einem der vorangehenden Ansprüche, **dadurch gekennzeichnet**, daß wenigstens eine der Seiten des Flansches, die an den Wulsten zur Auflage kommt, in ihren an die halbkreisförmigen Bereiche der beiden Öffnungen angrenzenden Zonen (11, 12) eine konvexe Krümmung in der Längsrichtung des Flansches aufweist.

5. Flansch nach einem der vorangehenden Ansprüche, **dadurch gekennzeichnet**, daß wenigstens eine der Seiten des Flansches, die an den Wulsten zur Auflage kommt, in ihren an die halbkreisförmigen Bereiche der beiden Öffnungen angrenzenden Zonen eine konvexe Krümmung in der Querrichtung des Flansches aufweist.

6. Flansch nach Anspruch 4 und 5, **dadurch gekennzeichnet**, daß die besagten Zonen aus kugelförmigen Teilflächen bestehen.

7. Flansch nach Anspruch 6 , **dadurch gekennzeichnet**, daß die Mittelpunkte der Kugeln, zu denen die besagten Teilflächen gehören, in etwa auf den Achsen (Al, A2) der halbkreisförmigen Bereiche der beiden Öffnungen liegen.

## Claims

1. A strut, for the simultaneous attachment to an component (25) of a fluid circuit, especially in a motor vehicle air conditioning installation, of the free ends of two tubular elements (21, 22) which extend substantially parallel to each other from the said ends, and which are joined together at their opposite ends, the strut being adapted to bear on annular beads (23, 24) which are provided on the said free ends, for compressing sealing gaskets between the latter and receiving surfaces of the said component under the action of tightening means which urge the strut towards the said component, the strut being in the form of an elongated plate (1) defining, through its thickness, two apertures (2, 3), one of which is in the form of an open notch in one of its ends, and which are respectively arranged to receive the two tube elements, the apertures including substantially semicircular regions (4, 6) which are matched to the circumference of the tube elements, the said notch defining, between the end of the strut and the semicircular region, a slot with parallel sides (5) which are substantially tangential to the latter, characterised in that the second aperture is surrounded by the material of the strut over the whole of its periphery, and includes a widened region (7) which is adapted to enable the bead (24) of the corresponding tube element (22) to pass through it, and which is joined directly to the substantially semicircular region.

2. A strut according to Claim 1, characterised in that the convexity of the semicircular region (6) of the second aperture is directed towards the notch.

3. A strut according to Claim 1 or Claim 2, characterised in that the said widened region has a profile in the form of an arc of a circle (7) greater than a semicircle.

4. A strut according to one of the preceding Claims, characterised in that at least one of the faces of the strut, for engagement on the beads, has, in its zones (11, 12) adjacent to the semicircular regions of the two apertures, a curvature which is convex in the longitudinal direction of the strut.

5. A strut according to one of the preceding Claims, characterised in that at least one of the faces of the strut, for engagement on the beads, has, in its zones (11, 12) adjacent to the semicircular regions of the two apertures, a curvature which is convex in the transverse direction of the strut.

6. A strut according to Claim 4 and Claim 5, characterised in that the said zones comprise spherical surface portions.

7. A strut according to Claim 6, characterised in that the centres of the spheres of which the said surface portions form part are situated substantially on the axes (A1, A2) of the semicircular regions of the two apertures.
